# EUROPÄISCHE PATENTSCHRIFT

(11) **EP 2 195 543 B1**
(45) Veröffentlichungstag und Bekanntmachung des Hinweises auf die Patenterteilung: **06.11.2013**
(21) Anmeldenummer: 08804814.5
(22) Anmeldetag: 26.09.2008
(51) Int. Cl.: F16B 5/01, F16B 13/14

(54) **KLEBEDÜBEL ZUM EINSETZEN IN EINE LEICHTBAUPLATTE**
ADHESIVE ANCHOR FOR INSERTION INTO A LIGHTWEIGHT BUILDING PANEL
CHEVILLE À COLLER, À INSTALLER DANS UN PANNEAU DE CONSTRUCTION LÉGER

(30) Priorität: 02.10.2007 DE 202007013800 U
(43) Veröffentlichungstag der Anmeldung: 16.06.2010
(73) Patentinhaber: Hettich-Heinze GmbH & Co. KG, 32139 Spenge (DE)
(72) Erfinder: POPPENBORG, Norbert, 32105 Bad Salzuflen (DE); NOLTE, Frank, 49086 Osnabrück (DE)
(74) Vertreter: Dantz, Jan Henning
(86) Internationale Anmeldenummer: PCT/EP2008/062939
(87) Internationale Veröffentlichungsnummer: WO 2009/047138

(56) Entgegenhaltungen:
- WO-A-2006/106131
- GB-A- 1 349 200
- US-A- 3 766 636
- US-A- 4 902 180

## Beschreibung

Die vorliegende Erfindung betrifft einen Klebedübel mit einem Einschraubkanal für eine Befestigungsschraube zum Einsetzen in eine Leichtbauplatte, die eine erste und eine zweite Deckplatte aus Holz oder einem holzartigen Werkstoff und eine dazwischen liegende Mittelschicht in Wabenstruktur aufweist, wobei der Klebedübel im montierten Zustand mittels eines Klebers in der Leichtbauplatte festlegbar ist und eine Bohrung in einer Deckplatte durchtritt und mit einem stirnseitigen Ende auf der der durchbohrten Deckplatte gegenüberliegenden Deckplatte aufliegt und mit seinem anderen Ende bündig innerhalb der Bohrung liegt.

Klebedübel der vorerwähnten Art sind an sich bekannt und dienen dazu, Beschlagteile oder dergleichen auch an einer Leichtbauplatte festlegen zu können, wobei die Belastungen im Verbindungsbereich in der Regel statisch und relativ klein sind.

Die WO 2006/106131 offenbart einen Verbindungseinsatz in Form eines mehrteiligen Klebedübels, bei dem ein zentrischer Klebstoffzuführkanal ausgebildet ist, der mit quer dazu stehenden Austrittsöffnungen in Verbindung steht. Um ein Innenteil ist dabei eine Außenhülse angeordnet, mittels der der injizierte Klebstoff verteilt wird.

Der vorliegenden Erfindung liegt die Aufgabe zugrunde, einen Klebedübel der gattungsgemäßen Art zu schaffen, der auch eine sichere Anbindung exponierter und sowohl dynamisch wie auch statisch hoch belasteter Bauteile an einer Leichtbauplatte ermöglicht, insbesondere die sichere Anbindung eines Tischbeines einer als Tischplatte genutzten Leichtbauplatte.

Die Aufgabe wird erfindungsgemäß dadurch gelöst, dass das auf einer Deckplatte aufliegende stirnseitige Ende einen in Richtung der Längsachse des Klebstoffdübels vorstehenden Stützrand aufweist und dass der Klebstoffdübel mit von dieser Stirnseite aus aufsteigenden Fließkanälen versehen ist, welche in radial verlaufende Austrittsöffnungen in demjenigen Bereich einmünden, welcher bündig innerhalb der Bohrung liegt.

Bedingt dadurch, dass der Klebedübel in seinem auf einer Deckplatte aufliegenden stirnseitigen Bereich mit einem Stützrand und einer gegenüber diesem Stützrand zurückspringenden Stirnfläche ausgestattet ist, kann praktisch der vollständige Durchmesser-Bereich des Klebedübels zum Festkleben auf der nicht durchbohrten Deckplatte genutzt werden. Durch die Möglichkeit, von hier ausgehend einen Kleber bis in den oberen, umfangsseitigen Abschnitt des Klebedübels zu verbringen, kann dieser im montierten Zustand in der Bohrung liegende obere Bereich zusätzlich in der Bohrung verklebt werden, so dass eine extrem hohe Stabilität des Klebedübels im montierten Zustand erreicht wird.

Da beim erfindungsgemäßen Klebedübel die Einschraubbohrung ausschließlich dazu genutzt wird, eine Befestigungsschraube einzuschrauben, kann diese Einschraubbohrung unter Berücksichtigung des verwendeten Materials zur Herstellung des Klebedübels so dimensioniert werden, dass ein sicheres, selbsttätiges Einschneiden der Befestigungsschraube innerhalb des Klebedübels gewährleistet ist. Auch hierdurch wird eine hohe Belastbarkeit und Stabilität einer angestrebten Verbindung deutlich erhöht.

Weitere Merkmale sind Gegenstand von Unteransprüchen.

Ausführungsbeispiele der Erfindung sind in den beigefügten Zeichnungen dargestellt und werden im Folgenden näher beschrieben.

Es zeigen:
- Figur 1: einen Schnitt durch einen in den Eckbereich einer Leichtbauplatte eingesetzten, erfindungsgemäßen Klebedübel lotrecht zu dessen Längsachse
- Figur 2: einen Schnitt nach der Linie II-II in Figur 1 mit einem angedeuteten, am Klebedübel in einer Vormontage festgelegten Tischbein
- Figur 3: einen Schnitt nach der Linie III-III in Figur 1
- Figur 4: eine perspektivische Darstellung des aus einem hülsenartigen Bauteil und einem Einsteckzapfen bestehenden Klebedübels in einer Vormontageposition
- Figur 5: eine Unteransicht des Klebedübels in Richtung des Pfeiles V in Figur 4
- Figur 6: einen Schnitt nach der Linie VI-VI in Figur 5
- Figur 7: einen um 90° gedreht gezeigten Schnitt nach der Linie VII-VII in Figur 5
- Figur 8: eine perspektivische Darstellung eines in den Eckbereich einer Leichtbauplatte eingesetzten Klebedübels nach einem weiteren Ausführungsbeispiel der Erfindung mit in Vormontageposition befindlichem Tischbein
- Figur 9: eine Ansicht in Richtung des Pfeiles IX in Figur 8
- Figur 10: einen Schnitt nach der Linie X-X in Figur 9
- Figuren 11a bis 11d: verschiedene Perspektivdarstellungen eines hülsenartigen Bauteiles des Klebedübels nach dem Ausführungsbeispiel gemäß den Figuren 8 bis 10
- Figuren 12a bis 12d: verschiedene Perspektivdarstellungen eines Einsteckzapfens des Klebedübels gemäß dem Ausführungsbeispiel nach den Figuren 8 bis 10
- Figur 13: einen Schnitt durch einen in den Eckbereich einer Leichtbauplatte eingesetzten, erfindungsgemäßen Klebedübel mit daran befestigtem Tischbein
- Figur 14: einen Axialschnitt durch den Klebedübel gemäß Figur 13
- Figur 15: eine Perspektivdarstellung eines hülsenartigen Bauteiles des Klebedübels nach den Figuren 13 und 14
- Figuren 16a und 16b: verschiedene Perspektivdarstellungen eines Einsteckzapfens des Klebedübels nach den Figuren 13 und 14
- Figur 17: eine Draufsicht auf den Eckbereich einer Leichtbauplatte, an der mittels eines Klebedübels nach einem weiteren Ausführungsbeispiel der Erfindung ein Tischbein festgelegt ist
- Figur 18: einen Schnitt nach der Linie XVIII-XVIII in Figur 17
- Figur 19: eine Perspektivdarstellung des Eckbereiches der Leichtbauplatte gemäß Figur 17 mit eingesetztem Klebedübel
- Figur 20: eine Perspektivdarstellung der Leichtbauplatte gemäß Figur 18 mit befestigtem Tischbein
- Figuren 21a und 21b: verschiedene Perspektivdarstellungen des Klebedübels nach dem Ausführungsbeispiel nach den Figuren 17 bis 20
- Figur 22: eine Draufsicht auf den Klebedübel gemäß den Figuren 21a und 21b
- Figur 23: eine Ansicht in Richtung des Pfeiles 23 in Figur 22
- Figur 24: eine perspektivische Oberansicht des Klebedübels gemäß den Figuren 22 und 23
- Figur 25: eine Unteransicht des Klebedübels nach den Figuren 22 bis 24
- Figur 26: einen Schnitt nach der Linie XXVI-XXVI in Figur 25
- Figur 27: eine Ansicht in Richtung des Pfeiles XXVII in Figur 26, teilweise im Schnitt gezeigt
- Figur 28: eine gegenüber Figur 25 um 45° gedrehte Unteransicht des Klebedübels
- Figur 29: einen Schnitt nach der Linie XXIX-XXIX in Figur 28
- Figur 30: einen Schnitt nach der Linie XXX-XXX in Figur 28.

In den Zeichnungen sind insgesamt vier verschiedene Ausführungsbeispiele von erfindungsgemäßen Klebedübeln gezeigt, wobei diese Klebedübel durchgängig mit dem Bezugszeichen 1 versehen sind.

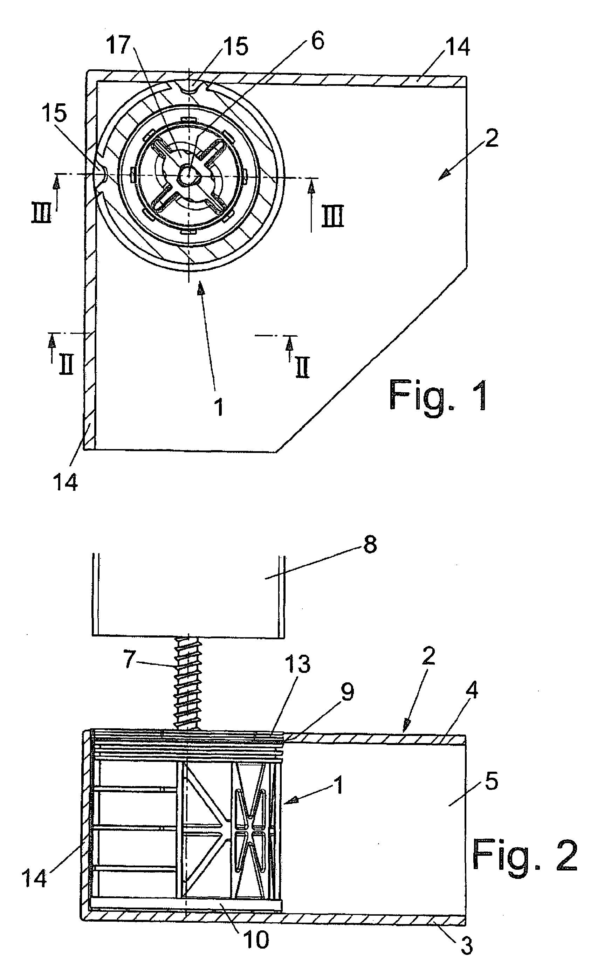

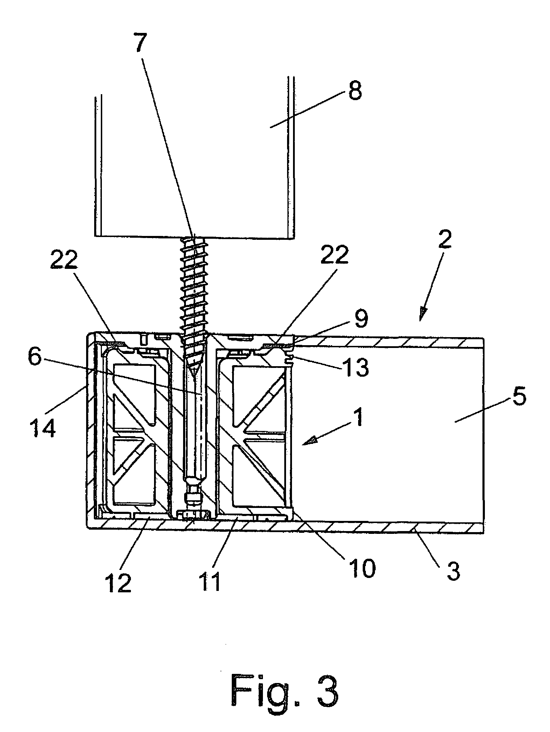

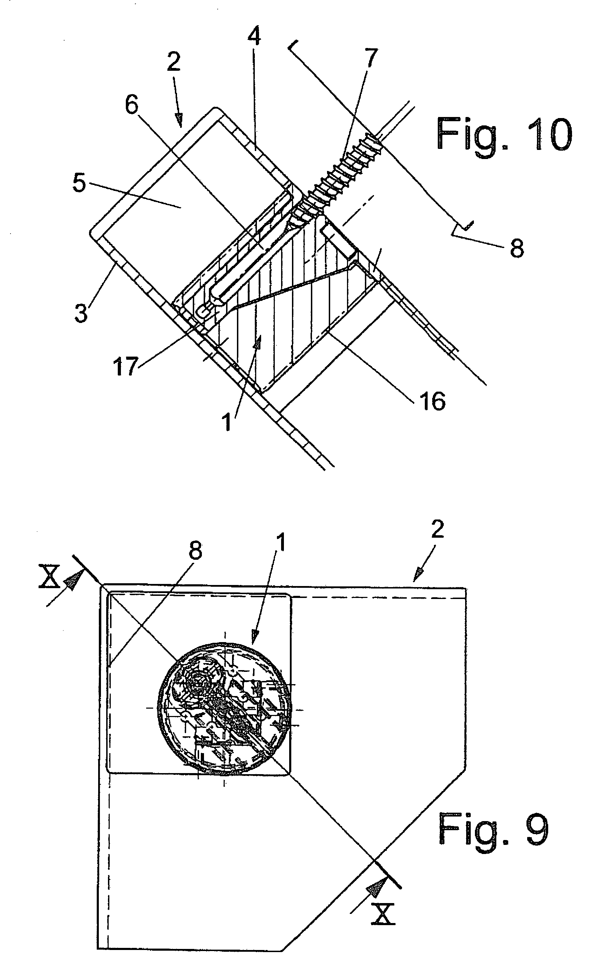

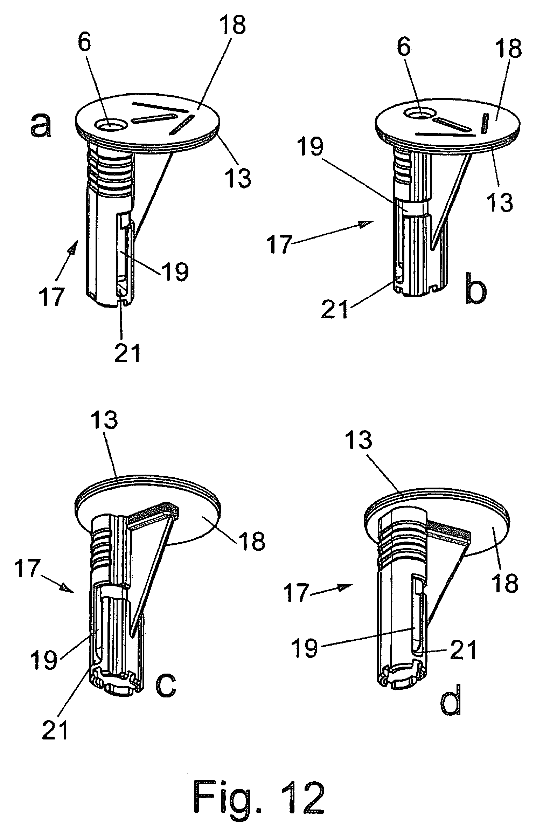

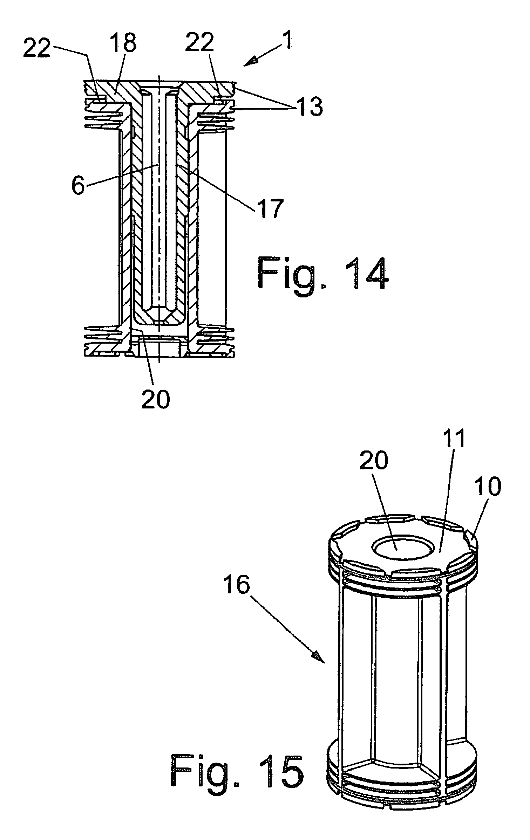

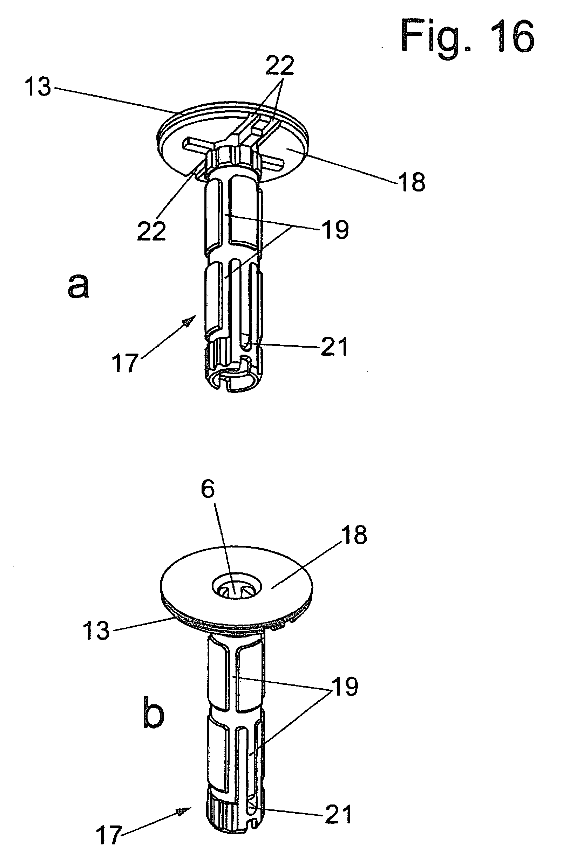

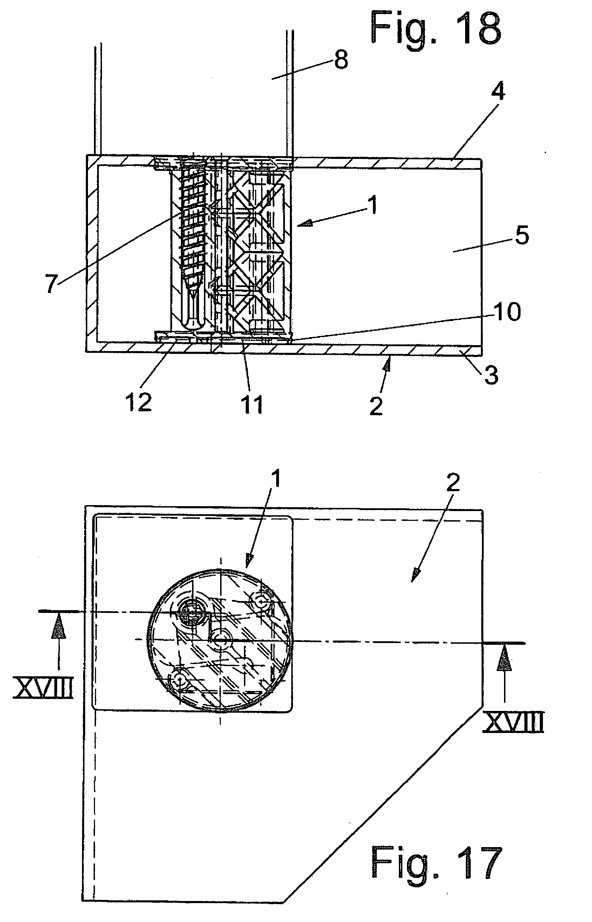

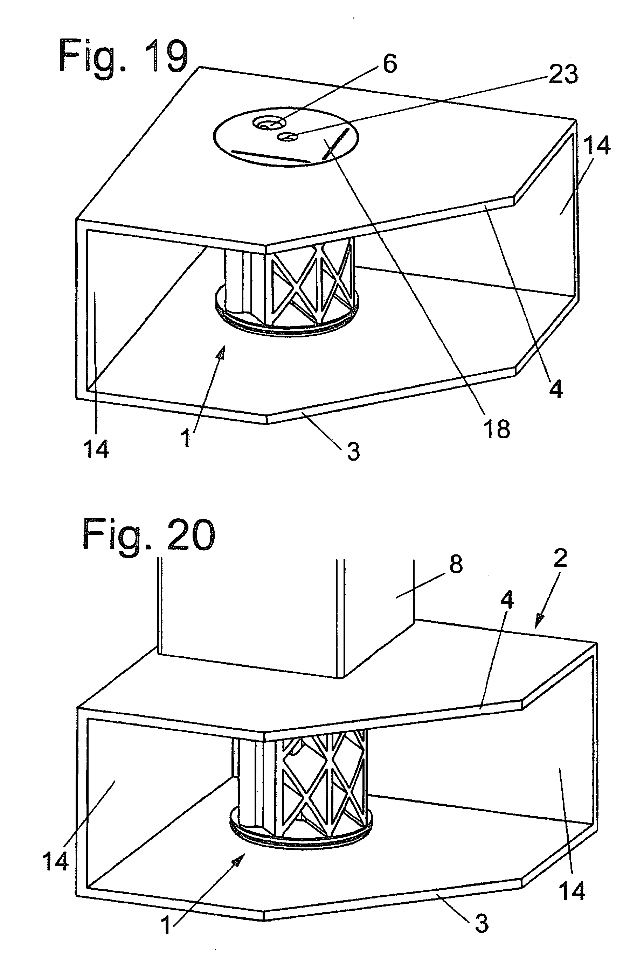

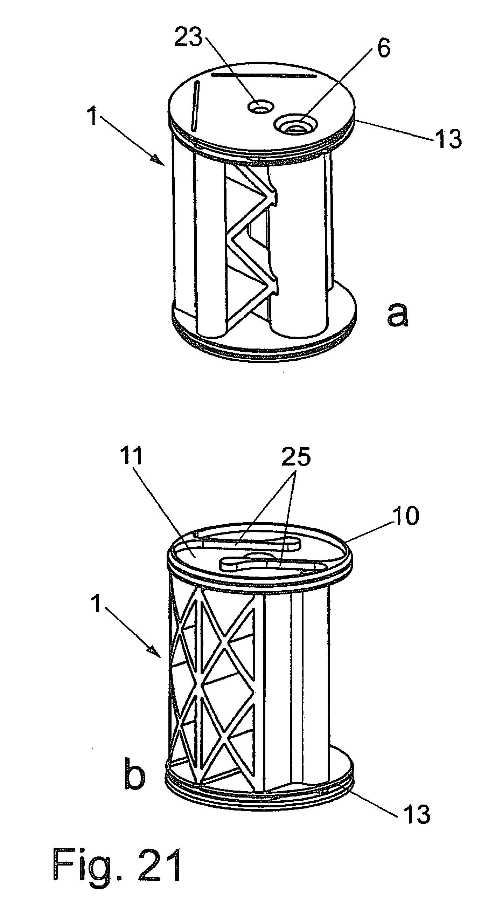

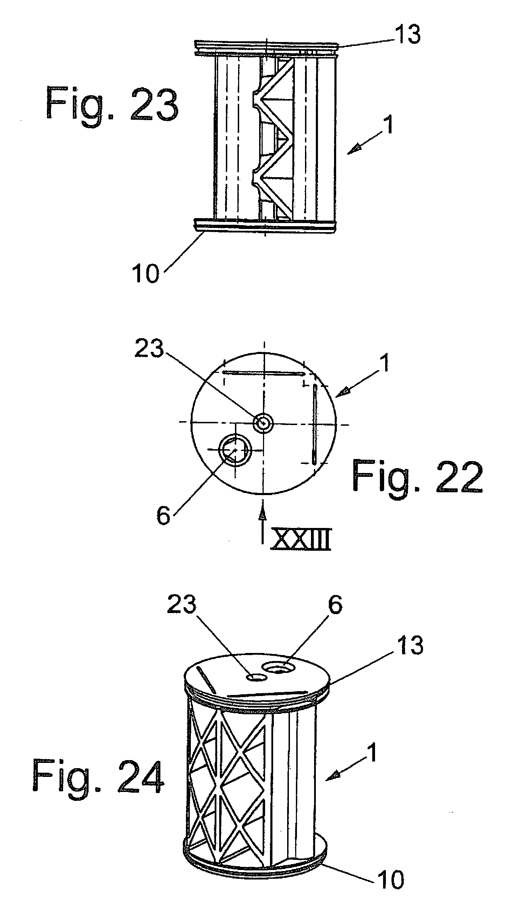

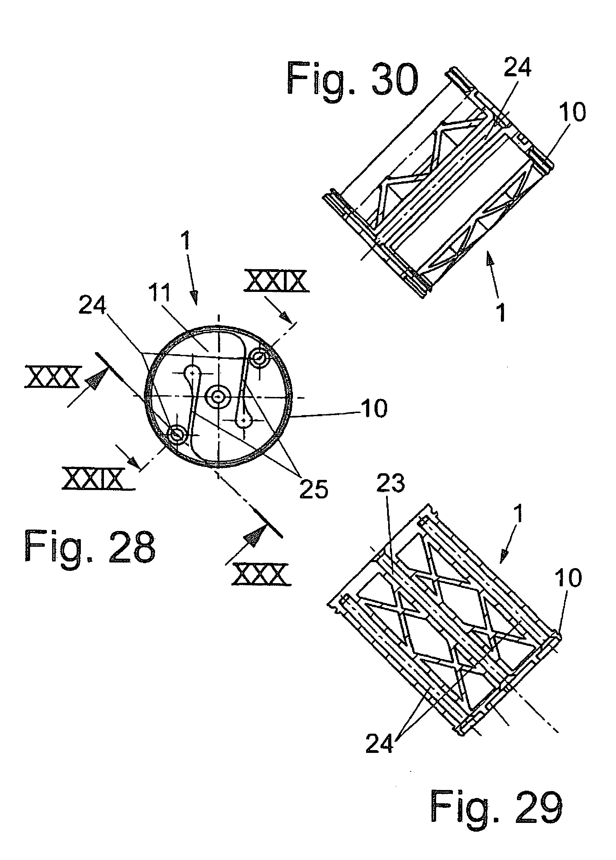

Dabei ist in den Figuren 1 bis 7, 8 bis 12 und 13 bis 16 jeweils ein zweiteiliger Klebedübel 1 dargestellt, während das Ausführungsbeispiel nach den Figuren 17 bis 30 einen einteiligen Klebedübel 1 zeigt.

Generell ist ein derartiger Klebedübel 1 dafür bestimmt, in eine insgesamt mit dem Bezugszeichen 2 bezeichnete Leichtbauplatte eingebracht zu werden.

Die Leichtbauplatte 2 besteht in an sich bekannter Weise aus einer ersten und einer zweiten Deckplatte 3,4 und aus einer dazwischen angeordneten Mittelschicht 5, die in an sich bekannter Weise eine Wabenstruktur aufweist. Auf die detaillierte Darstellung dieser Wabenstruktur im Bereich der Mittelschicht 5 ist aus Gründen der Übersichtlichkeit verzichtet worden.

Die beiden Deckplatten 3 und 4 sind vorzugsweise aus Holz oder einem holzartigen Werkstoff hergestellt.

Jeder Klebedübel 1 ist mit einem Einschraubkanal 6 versehen, der zur Aufnahme einer Befestigungsschraube 7 dient, mittels derer beispielsweise ein Tischbein 8 an einer als Tischplatte genutzten Leichtbauplatte 2 befestigt werden soll.

Um hier eine sichere Festlegung des Tischbeines 8 zu ermöglichen, welches sowohl hohen statischen wie auch dynamischen Belastungen ausgesetzt sein kann, ist es von großer Bedeutung, einen Klebedübel 1 sehr sicher innerhalb der Leichtbauplatte 2 festlegen zu können.

Um dieses Ziel zu erreichen, ist bei allen Klebedübeln 1, welche durch eine Bohrung 9 in einer der Deckplatten 4 in die Leichtbauplatte 2 eingesetzt werden und auf der der Bohrung 9 gegenüberliegenden Innenseite der anderen Deckplatte 3 aufliegen, vorgesehen, dass das auf der Deckplatte 3 aufliegende stirnseitige Ende einen in Richtung der Längsachse des Klebedübels 1 vorstehenden Stützrand 10 aufweist, so dass sich zwischen der Deckplatte 3 und der durch den vorstehenden Stützrand 10 zurückversetzten Stirnfläche des Klebedübels 1 eine Kammer 12 bildet, deren Grundfläche praktisch der gesamten Grundfläche des Klebedübels 1 entspricht. Diese Kammer 12 kann nun vollständig mit einem Kleber, einem Leim oder dergleichen gefüllt werden, so dass jeder Klebedübel 1 über seine gesamte Grundfläche hinweg vollflächig mit der Deckplatte 3 verklebt ist.

Weiterhin ist jeder Klebedübel 1 an seinem dem Stützrand 10 gegenüberliegenden Ende mit einem umlaufenden Bund 13 versehen, der zumindest teilweise bündig innerhalb der Bohrung 9 liegt. Auch im Bereich dieser gegenseitigen Anlage wird ein Kleber, ein Leim oder dergleichen benutzt, um den Klebedübel 1 innerhalb der Bohrung 9 sicher festzulegen.

Die vorstehend beschriebenen Merkmale sind allen gezeigten Ausführungsbeispielen zu eigen, so dass im Folgenden nunmehr nur noch die speziellen Gestaltungsmerkmale der verschiedenen Ausführungsbeispiele erläutert werden sollen.

Unter Bezugnahme auf die Figuren 1 bis 7 ist zunächst einmal festzustellen, dass der dort dargestellte Klebedübel 1 zusätzlich auch noch an Randleisten 14 einer als Tischplatte genutzten Leichtbauplatte 2 festgelegt werden kann. Zu diesem Zweck ist der Klebedübel 1 nach den erwähnten Figuren 1 bis 7 mit vorzugsweise um 90° zueinander winkelversetzt angeordneten Nuten 15 ausgestattet, welche im Abstützbereich des Klebedübels 1 gegenüber den Randleisten 14 die Möglichkeit bieten, durch in diese Nuten 15 eingebrachten Kleber oder Leim oder dergleichen den Klebedübel 1 zusätzlich gegenüber den Randleisten 14 zu verankern. Dies ergibt sich insbesondere aus der Darstellung gemäß Figur 1.

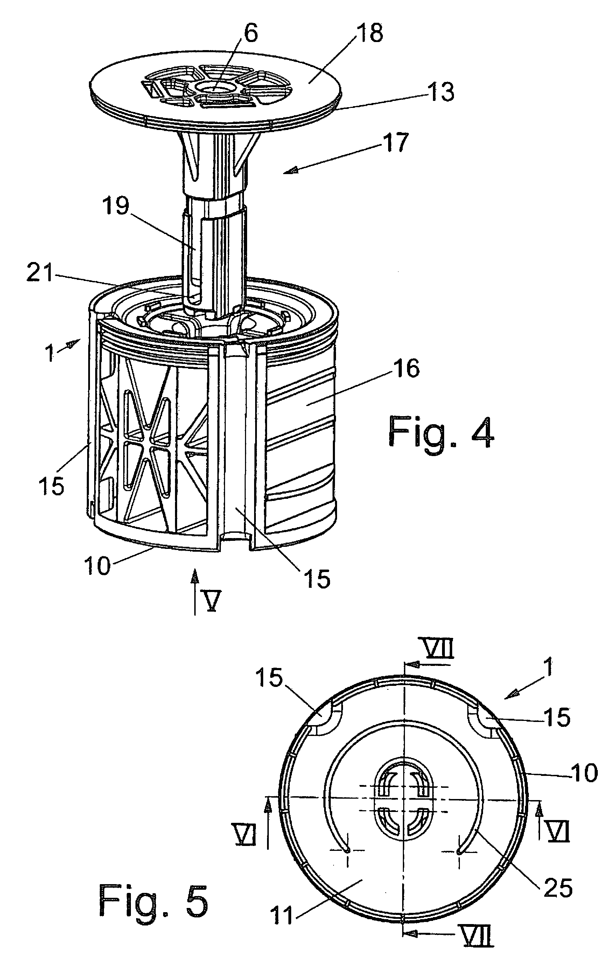

Im übrigen besteht der Klebedübel 1 gemäß den Figuren 1 bis 7 aus einem hülsenartigen Bauteil 16 und einem in dieses Bauteil 16 einbringbaren Einsteckzapfen 17. Wie sich insbesondere aus der perspektivischen Darstellung gemäß Figur 4 ergibt, ist der Einsteckzapfen 17 an einem Ende mit einem Deckel 18 ausgestattet, dessen Grundfläche der Grundfläche des hülsenartigen Bauteiles 16 entspricht. Nach dem Einbringen des Einsteckzapfens 17 in das Bauteil 16 bildet der Deckel den oberen Abschluss des zweiteiligen Klebedübels 1.

Der Einsteckzapfen 17 weist den schon angesprochenen Einschraubkanal 6 für eine Befestigungsschraube 7 auf.

Außenseitig ist der Einsteckzapfen 17 mit in Richtung der Längsachse des Einsteckzapfens 17 verlaufenden Längsnuten 19 versehen, von denen sich auf dem Umfang des Einsteckzapfens 17 mehrere, mindestens aber zwei Längsnuten 19 verteilen. Die die Längsnuten 19 begrenzenden erhabenen Abschnitte des Einsteckzapfens 17 liegen praktisch abdichtend an den Wandungen einer Einstecköffnung 20 des hülsenartigen Bauteiles 16 an. Die Längsnuten 19 verlaufen in Achsrichtung bis in den Bereich der unteren Stirnfläche 11 des hülsenartigen Bauteiles 16 und erstrecken sich andererseits bis zur Oberseite des Bauteiles 16 hin und gehen dort in radial verlaufende Austrittsöffnungen über, die im Bereich des Bundes 13 liegen.

Der Einschraubkanal 6 des Einsteckzapfens 17 ist in axialer Richtung in seinem dem Deckel 18 abgewandt liegenden unteren Ende verschlossen. In diesem unteren Bereich befinden sich aber zwei seitliche, radial verlaufende Einfüllöffnungen 21, die jeweils in eine Längsnut 19 des Einsteckzapfens 17 einmünden.

Durch die beschriebene Konstruktion ist nun der Transport eines flüssigen Klebers oder Leimes an alle relevanten und gewünschten Stellen ohne weiteres denkbar. Ein geeignetes Werkzeug wird in den Einschraubkanal 6 so weit eingetaucht, dass dieses Werkzeug mit seinem unteren Ende im Bereich der Einfüllöffnungen 21 des Einsteckzapfens 17 liegt. Durch dieses Werkzeug wird nun ein flüssiger Kleber, Leim oder dergleichen über die Einfüllöffnungen in den Bereich der Längsnuten 19 gefördert. Diese Längsnuten 19 bilden mit den entsprechend gegenüberliegenden Wandungsbereichen der Einstecköffnung 20 Fließkanäle, die unterseitig, wie schon erwähnt, in den Bereich der dort liegenden Kammer 12 und oberseitig in radial verlaufende Austrittsöffnungen einmünden, so dass der flüssige Kleber, Leim oder dergleichen in den Bereich der Kammer 12 ebenso zuverlässig eingebracht werden kann wie in den gegenüberliegenden oberen Bereich des Bundes 13, der innerhalb der Bohrung 9 liegt.

Da außerdem die Nuten 15 im Mantelbereich des hülsenartigen Bauteiles sich bis in den Bereich der Kammer 12 erstrecken, werden auch diese Nuten 15 aufsteigend mit Kleber oder Leim gefüllt, so dass eine zuverlässige Verklebung des Klebedübels 1 gegenüber der nicht durchbohrten Deckplatte 3, den Randleisten 14 und innerhalb der Bohrung 9 der oberen Deckplatte 4 erfolgen kann.

Hierdurch ist eine optimale Festlegung des Klebedübels gegenüber der Leichtbauplatte 2 gewährleistet. Der für das Eindrehen der Befestigungsschraube 7 genutzte obere Bereich des Einschraubkanales 6 ist vollkommen leimfrei und insgesamt so dimensioniert, dass eine Befestigungsschraube 7 sich nach Art einer selbstschneidenden Schraube in diesem Einschraubkanal 6 fest verankert.

Insgesamt ist der Klebedübel 1 aus Kunststoff gefertigt, d.h., sowohl das hülsenartige Bauteil 16 wie auch der Binsteckzapfen 17 mit seinem Deckel 18 sind aus einem geeigneten Kunststoff hergestellt.

Durch diese Konstruktion und Festlegung des Klebedübels 1 kann trotz Verwendung einer preiswerten Leichtbauplatte 2 beispielsweise ein Tischbein 8 ausgleichend fest an dieser Leichtbauplatte angeschlossen werden.

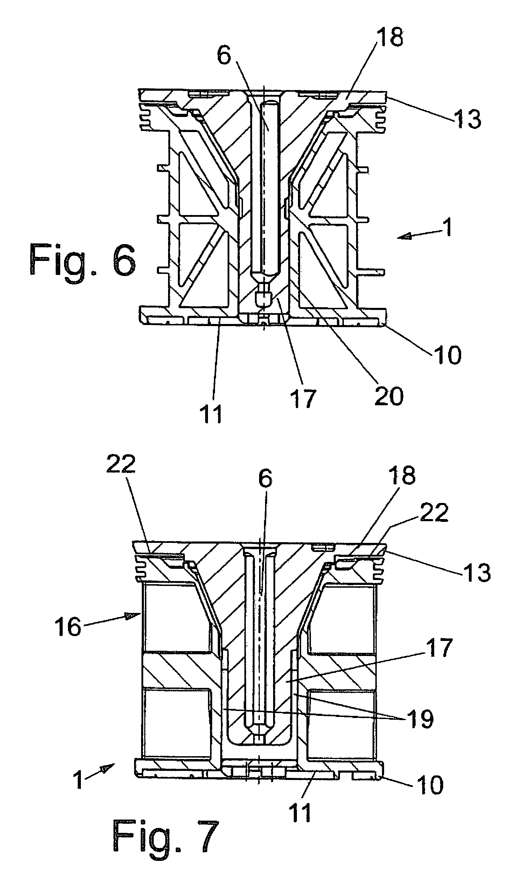

Wie besonders anschaulich aus den Figuren 6 und 7 hervorgeht, liegen die schon weiter oben angesprochenen, radial nach außen verlaufenden Austrittsöffnungen 22 zwischen der Oberseite des hülsenartigen Bauteiles 16 und der Unterseite des Deckels 18 des Einsteckzapfens 17, so dass dort hingelangender Kleber, Leim oder dergleichen nicht nur in den Bereich des innerhalb der Bohrung 9 liegenden Bundes 13 gelangen kann, sondern auch den Deckel 18 mit dem hülsenartigen Bauteil 16 verkleben und verbinden kann.

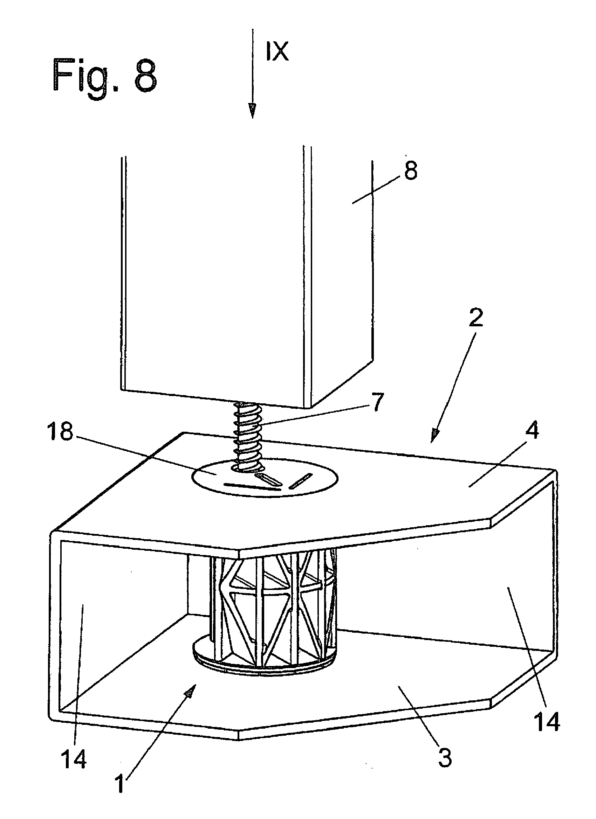

Der Klebedübel 1 gemäß den Figuren 8 bis 12 unterscheidet sich vom Klebedübel 1 gemäß dem vorstehend beschriebenen Ausführungsbeispiel nach den Figuren 1 bis 7 einerseits durch einen kleineren Durchmesser, andererseits aber auch dadurch, dass im Umfangsbereich des hülsenartigen Bauteiles 16 keine Nuten 15 vorgesehen sind und ganz wesentlich dadurch, dass der Einschraubkanal 6 gegenüber der Längsachse des Klebedübels 1 aus der Mitte versetzt angeordnet verläuft.

Ansonsten entspricht der Aufbau des Klebedübels 1 nach den Figuren 8 bis 12 funktionell dem oben beschriebenen Ausführungsbeispiel, d.h., auch hier sind durch die Gestaltung des Einsteckzapfens 17 mit seinen Längsnuten 19 Fließkanäle gebildet, mittels derer Klebstoff, Leim oder dergleichen sowohl sicher in den auf einer Deckplatte aufliegenden unteren Bereich des Klebedübels 1 wie auch in den oberen, im Bereich der Bohrung 6 der anderen Deckplatte 4 liegenden Bereich des Klebedübels 1 einbringbar ist, so dass eine optimale Verbindung zwischen dem Klebedübel 1 und den entsprechenden Anlagebereichen dieses Klebedübels 1 gegenüber einer Leichtbauplatte 2 gewährleistet ist.

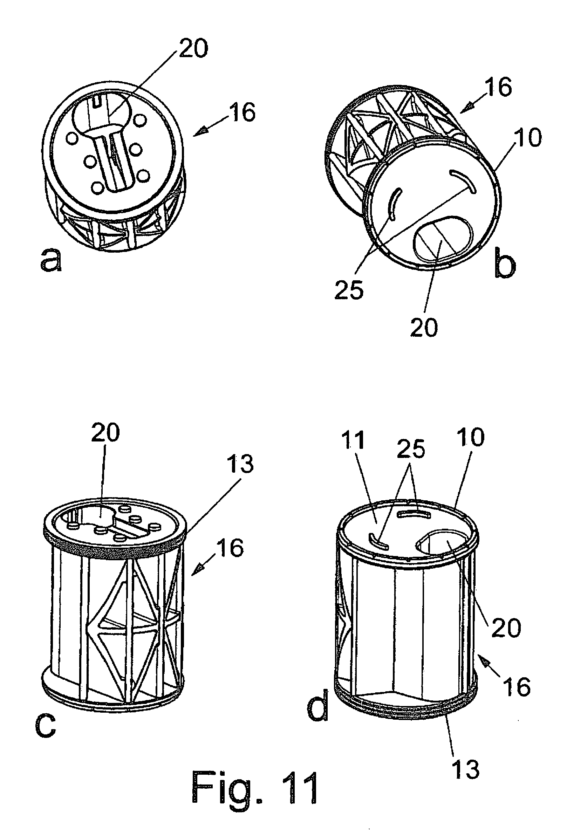

Das hülsenartige Bauteil 16 ist, was aus den Figuren 11b und 11d besonders anschaulich hervorgeht, unterseitig wieder mit einem axial vorstehenden Stützrand 10 ausgestattet, so dass die entsprechende Stirnfläche 11 dieses Bauteiles 16 gegenüber der Auflageebene des Stützrandes 10 zurückspringt. Somit wird durch die Stirnfläche 11, den Stützrand 10 und die Fläche der Deckplatte 3, auf der sich der Stützrand 10 abstützt, wieder eine Kammer gebildet, in die Kleber oder Leim zur vollflächigen Verklebung des Klebedübels 1 im Auflagebereich zur nicht durchbohrten Deckplatte 3 möglich ist. Durch die analog gebildeten Fließkanäle wird auch der obere, einen Bund 13 bildende Bereich des Klebedübels 1 in der Bohrung 9 sicher verklebt, außerdem wird der Deckel 18 des Einsteckzapfens 17 mit dem hülsenartigen Bauteil 16 durch Verklebung, Verleimung oder dergleichen fest verbunden.

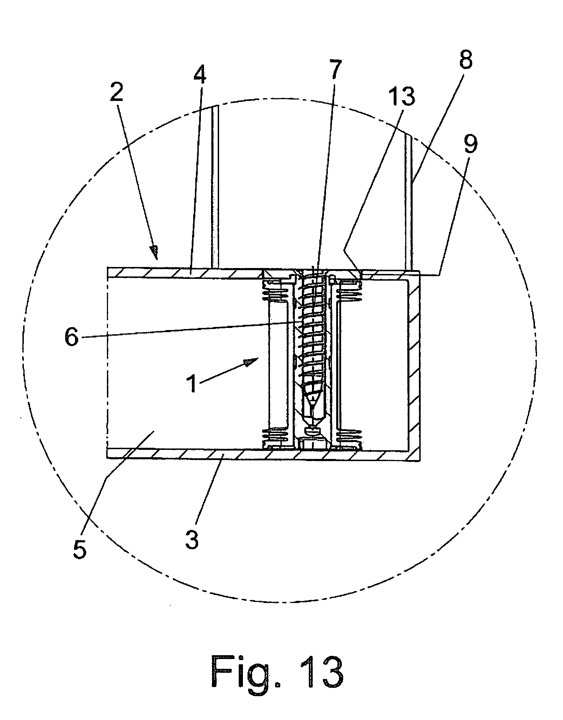

Auch beim Ausführungsbeispiel nach den Figuren 13 bis 16 ist ein Klebedübel 1 verwirklicht, der zweiteilig ausgebildet ist und aus einem hülsenartigen Bauteil 16 sowie einem Einsteckzapfen 17 besteht. Die Einstecköffnung 20 für den Einsteckzapfen 17 ist hier wiederum zentral angeordnet und durch die Längsnuten 19 des Einsteckzapfens 17 werden in der oben beschriebenen Weise in Verbindung mit den Wandungen der Einstecköffnung 20 wieder Fließkanäle gebildet, die sich von der Unterseite des Klebedübels 1 bis in den oberen Bereich erstrecken und dort in radiale Austrittsöffnungen 22 einmünden.

Einen gemäß den Figuren 13 bis 16 vergleichsweise einfach gestalteten und auch einen relativ geringen Durchmesser aufweisenden Klebedübel wird man bevorzugt dann einsetzen, wenn Bauteile an eine Leichtbauplatte angeschlossen werden sollen, die nicht extrem hohen Belastungen ausgesetzt sind.

In den Figuren 17 bis 30 ist ein Klebedübel 1 in einteiliger Ausführung gezeigt. Es wird erkennbar, dass diese einteilige Ausführung zusätzlich zum Einschraubkanal 6 zur Aufnahme einer Befestigungsschraube 7 eine separate Einfüllbohrung 23 für einen Kleber oder Leim aufweist. Diese Einfüllbohrung 23 erstreckt sich durch den gesamten Klebedübel 1 hindurch und mündet unterseitig in die Kammer 12, welche durch den axial vorspringenden Stützrand 10, die nicht durchbohrte Deckplatte 3 und die gegenüber dem Stützrand 10 zurückspringende Stirnfläche 11 des Klebedübels 1 begrenzt ist. Somit kann von der Oberseite des Klebedübels 1 ausgehend Leim in diese Kammer 12 eingebracht werden. Von dieser Kammer 12 ausgehend verlaufen Fließkanäle bildende Steigbohrungen 24 zur Oberseite des Klebedübels 1 bis in den Bereich von radialen Austrittsöffnungen 22, die sich im Bereich eines oberen, umlaufenden Bundes 13 befinden, der sich im montierten Zustand des Klebedübels 1 in der Bohrung 9 der durchbohrten Deckplatte 4 befindet.

Bei dieser Konstruktion erfolgt die Führung für den Kleber oder Leim in der Weise, dass der Kleber oder der Leim zunächst durch die Einfüllöffnung 23 in den Bereich der unteren Stirnfläche 11 des Klebedübels eingepresst wird, von da aus über die Steigleitungen 24 nach oben gedrückt und über die radial verlaufenden Austrittsöffnungen 22 in den Bereich des Bundes 13 und damit in den Lochlaibungsbereich der Bohrung 9 der durchbohrten Deckplatte 4 gefördert wird.

Auch bei dieser einteiligen Ausführung ist also sichergestellt, dass der Klebedübel 1 über seine gesamte Grundfläche hinweg mit einer nicht durchbohrten Deckplatte 3 und zusätzlich im Lochlaibungsbereich der Bohrung 9 der durchbohrten Deckplatte 4 verklebt wird.

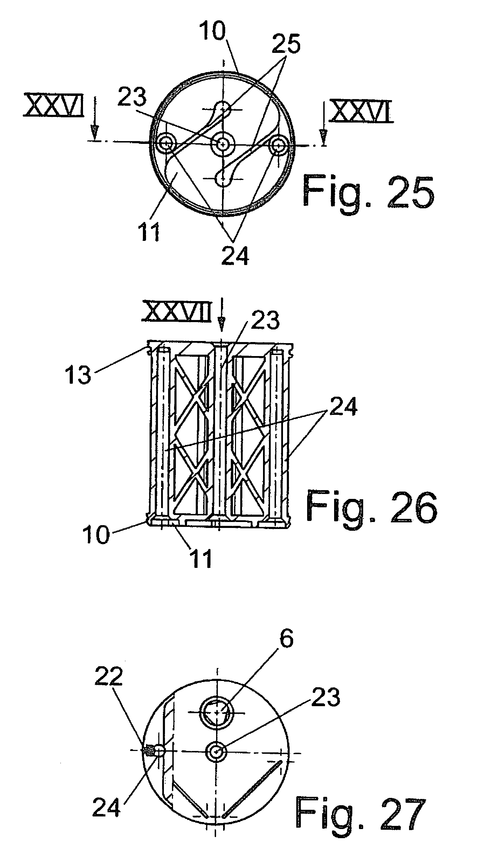

Unter Bezugnahme auf Figur 25 sei darauf hingewiesen, dass in dem von dem Stützrand 10 umhüllten Bereich des unteren Endes des Klebedübels 1 Leitrippen 25 vorgesehen sind, die für eine gleichmäßige Verteilung des Leimes oder eines Klebers über die Grundfläche des Klebedübels 1 hinweg vorgesehen sind.

Vergleichbare Leitrippen 25 in anderer geometrischer Anordnung können aber auch bei den Klebedübeln 1 nach den vorher beschriebenen Ausführungsbeispielen vorgesehen sein.

Bei den zweiteiligen Ausführungen besteht die Möglichkeit, den Deckel 18 des Einsteckzapfens 17 zumindest bereichsweise derart dünn auszuführen, dass hier eine gewisse Transparenz entsteht, so dass für einen Monteur erkennbar wird, wenn der eingefüllte Kleber oder Leim bis in den Bereich der radialen Austrittsöffnungen 22 gelangt ist. Die weitere Kleber- oder Leimzuführung kann dann sofort gestoppt und das unerwünschte Austreten von Kleber oder Leim verhindert werden.

### Bezugszeichenliste

- 1: Klebedübel
- 2: Leichtbauplatte
- 3: Deckplatte
- 4: Deckplatte
- 5: Mittelschicht
- 6: Einschraubkanal
- 7: Befestigungsschraube
- 8: Tischbein
- 9: Bohrung
- 10: Stützrand
- 11: Stirnfläche
- 12: Kammer
- 13: Bund
- 14: Randleisten
- 15: Nuten
- 16: hülsenartiges Bauteil
- 17: Einsteckzapfen
- 18: Deckel
- 19: Längsnuten
- 20: Einstecköffnung
- 21: Einfüllöffnungen
- 22: Austrittsöffnungen
- 23: Einfüllbohrung
- 24: Steigbohrungen
- 25: Leitrippen

## Patentansprüche

1. Klebedübel (1) mit einem Einschraubkanal (6) für eine Befestigungsschraube (7) zum Einsetzen in eine Leichtbauplatte (2), die eine erste und eine zweite Deckplatte (3, 4) aus Holz oder einem holzartigen Werkstoff und eine dazwischen liegende Mittelschicht (5) in Wabenstruktur aufweist, wobei der Klebedübel (1) im montierten Zustand mittels eines Klebers in der Leichtbauplatte (2) festlegbar ist und eine Bohrung (9) in einer Deckplatte (4) durchtritt und mit einem stirnseitigen Ende auf der der durchbohrten Deckplatte (4) gegenüberliegenden Deckplatte (3) aufliegt und mit seinem anderen Ende bündig innerhalb der Bohrung (9) liegt, **dadurch gekennzeichnet, dass** das im montierten Zustand auf einer Deckplatte (3) aufliegende stirnseitige Ende einen in Richtung der Längsachse des Klebedübels (1) vorstehenden Stützrand (10) aufweist, und dass der Klebedübel (1) mit von dieser Stirnseite aus aufsteigenden Fließkanälen versehen ist, welche in radial verlaufende Austrittsöffnungen (22) in demjenigen Bereich einmünden, welcher im montierten Zustand bündig innerhalb der Bohrung (9) liegt.

2. Klebedübel nach Anspruch 1, **dadurch gekennzeichnet, dass** innerhalb der vom Stützrand (10) begrenzten und zurückspringenden Stirnfläche (11) bis zur Stützebene des Stützrandes (10) vorspringende Leitrippen (25) zur Verteilung eines in den Bereich der zurückspringenden Stirnfläche (11) eingebrachten Klebers vorgesehen sind.

3. Klebedübel nach Anspruch 1 oder 2, **dadurch gekennzeichnet, dass** der Klebedübel (1) umfangsseitig mit zwei in einem Winkel von vorzugsweise 90° zueinander versetzten und in Achsrichtung der Längsachse verlaufenden Nuten (15) versehen ist, deren Ränder im montierten Zustand an den Innenseiten von Randleisten (14) der Leichtbauplatte (2) anliegen und in den Bereich der zurückversetzten Stirnfläche (11) einmünden.

4. Klebedübel nach einem der vorhergehenden Ansprüche, **dadurch gekennzeichnet, dass** der Klebedübel (1) zweistückig ausgebildet ist und aus einem äußeren, hülsenartigen Bauteil (16) sowie einem Einsteckzapfen (17) besteht, wobei der Einsteckzapfen (17) mit dem Einschraubkanal (6) versehen und in seinem unteren, der zurückversetzten Stirnfläche (11) des Klebedübels (1) zugewandten Bereich mit vom Einschraubkanal (6) radial nach außen und in Fließkanäle einmündende Einfüllöffnungen (21) zum Einbringen eines flüssigen Klebers ausgestattet ist.

5. Klebedübel nach einem der vorhergehenden Ansprüche, **dadurch gekennzeichnet, dass** der Einsteckzapfen (17) in eine Einstecköffnung des hülsenartigen Bauteiles (16) eingepresst und umfangsseitig mit in Achsrichtung des Einsteckzapfens (17) verlaufenden Längsnuten (19) versehen ist, welche in Verbindung mit der Wandung der Einstecköffnung (20) die genannten Fließkanäle bilden und die sich einerseits bis in den Bereich der zurückversetzten unteren Stirnfläche (11) und andererseits bis in den Bereich der oberen, radialen Austrittsöffnungen (22) erstrecken.

6. Klebedübel nach einem der vorhergehenden Ansprüche, **dadurch gekennzeichnet, dass** der Einsteckzapfen (17) oberseitig mit einem Deckel (18) ausgestattet ist, dessen Grundfläche der Grundfläche des hülsenartigen Bauteiles (16) entspricht und dass dieser Deckel (18) im montierten Zustand des Klebedübels (1) mit dem hülsenartigen Bauteil (16) verklebt ist.

7. Klebedübel nach einem der vorhergehenden Ansprüche, **dadurch gekennzeichnet, dass** der Klebedübel (1) einstückig ausgebildet und neben dessen Einschraubkanal (6) mit einer separaten Einfüllbohrung (23) für einen Kleber versehen ist.

8. Klebedübel nach Anspruch 7, **dadurch gekennzeichnet, dass** die Einfüllbohrung in den zurückversetzten unteren Bereich des Klebedübels (1) einmündet und dass von hier ausgehend axial nach oben bis zu den radialen Austrittsöffnungen (22) verlaufende und Fließkanäle bildende Steigbohrungen (24) vorgesehen sind.

9. Klebedübel nach einem der vorhergehenden Ansprüche, **dadurch gekennzeichnet, dass** der Einschraubkanal (6) zentral innerhalb der Grundfläche des Klebedübels (1) angeordnet ist.

10. Klebedübel nach einem der vorhergehenden Ansprüche, **dadurch gekennzeichnet, dass** der Einschraubkanal (6) dezentral innerhalb der Grundfläche des Klebedübels (1) angeordnet ist.

11. Klebedübel nach einem der vorhergehenden Ansprüche, **dadurch gekennzeichnet, dass** der Klebedübel (1) aus Kunststoff gefertigt ist.

12. Klebedübel nach einem der vorhergehenden Ansprüche, **dadurch gekennzeichnet, dass** der Deckel (18) zumindest bereichsweise mit transparenten Bereichen ausgestattet ist.

## Claims

1. An adhesive anchor (1) having a screw-in channel (6) for a fastening screw (7) for insertion into a lightweight building panel (2) which comprises a first and second cover panel (3, 4) made of wood or wood-like material, and an interposed center layer (5) in a honeycomb structure, wherein the adhesive anchor (1) can be fixed in the lightweight building panel (2) in the mounted state by means of an adhesive and penetrates a bore (9) in a cover panel (4) and rests on the cover panel (3) opposite the drilled-through cover panel (4) with a front end thereof, and is positioned flush inside the bore (9) with the other end thereof, **characterized in that** the front end resting on a cover panel (3) has a support edge (10) protruding in the direction of the longitudinal axis of the adhesive anchor (1) in the mounted state, and the adhesive anchor (1) is provided with flow channels which rise from said front side and open into radially extending outlet openings (22) in the region which rests flush within the bore (9) in the mounted state.

2. An adhesive anchor according to claim 1, **characterized in that** protruding guide ribs (25) for the distribution of an adhesive introduced into the region of the set-back face (11) are provided within the face (11) which is delimited by the set-back support edge (10) up to the support plane of the support edge (10).

3. An adhesive anchor according to claim 1 or 2, **characterized in that** the adhesive anchor (1) is provided on the circumferential side with two grooves (15) which are offset from one another at preferably 90° and extend in the axial direction of the longitudinal axis, and whose edges rest on the insides of trimming strips (14) of the lightweight building panel (2) in the mounted state and open into the region of the set-back face (11).

4. An adhesive anchor according to one of the preceding claims, **characterized in that** the adhesive anchor (1) is arranged in two parts and consists of an outer sleeve-like component (16) and a plug-in peg (17), with the plug-in peg (17) being provided with the screw-in channel (6) and is provided in its bottom region facing the set-back face (11) of the adhesive anchor (1) with filling openings (21) which open radially to the outside from the screw-in channel and into flow channels for introducing a fluid adhesive.

5. An adhesive anchor according to one of the preceding claims, **characterized in that** the plug-in peg (17) is pressed into an insertion opening of the sleeve-like component (16) and is provided on the circumferential side with longitudinal grooves (19) which extend in the axial direction of the plug-in peg (17), form the said flow channels in conjunction with the walls of the insertion opening (20) and extend on the one hand up to the region of the set-back bottom face (11), and on the other hand up to the region of the upper radial outlet openings (22).

6. An adhesive anchor according to one of the preceding claims, **characterized in that** the plug-in peg (17) is provided on the upper side with a cover (18) whose area corresponds to the area of the sleeve-like component (16), and said cover (18) is glued together with the sleeve-like component (16) in the mounted state of the adhesive anchor (1).

7. An adhesive anchor according to one of the preceding claims, **characterized in that** the adhesive anchor (1) is arranged integrally and is provided with a separate filling bore (23) for an adhesive in addition to its screw-in channel (6).

8. An adhesive anchor according to claim 7, **characterized in that** the filling bore opens into the set-back bottom region of the adhesive anchor (1) and riser bores (24) are provided starting from here, which bores extend axially upwardly to the radial outlet openings (22) and form flow channels.

9. An adhesive anchor according to one of the preceding claims, **characterized in that** the screw-in channel (6) is arranged centrally within the area of the adhesive anchor (1).

10. An adhesive anchor according to one of the preceding claims, **characterized in that** the screw-in channel (6) is arranged in a decentralized way within the area of the adhesive anchor.

11. An adhesive anchor according to one of the preceding claims, **characterized in that** the adhesive anchor (1) is made of plastic.

12. An adhesive anchor according to one of the preceding claims, **characterized in that** the cover (18) is provided at least in sections with transparent areas.

## Revendications

1. Cheville adhésive (1) comportant un canal taraudé (6) de réception d'une vis de fixation (7) destinée à être insérée dans un panneau de construction léger (2) comportant un premier et un second panneau de recouvrement (3, 4) en bois ou en un matériau de type bois et une couche médiane (5) située entre ces deux panneaux et ayant une structure en nid d'abeille, à l'état monté, la cheville adhésive (1) pouvant être fixée par un adhésif dans le panneau de construction léger (2), traversant un perçage (9) d'un panneau de recouvrement (4) s'appliquant, par son extrémité frontale contre le panneau de recouvrement (3) situé à l'opposé du panneau de recouvrement percé (4), et étant située par son autre extrémité à fleur du perçage (9),
**caractérisée en ce qu'**
l'extrémité frontale s'appliquant à l'état monté contre un panneau de recouvrement (3) comporte un bord d'appui (10) faisant saillie en direction de l'axe longitudinal de la cheville adhésive (1), et, cette cheville adhésive (1) est équipée de canaux d'écoulement qui s'étendent vers le haut à partir de cette face frontale et débouchent dans des ouvertures de sortie (22) s'étendant radialement dans la zone qui, à l'état monté est située à fleur à l'intérieur du perçage (9).

2. Cheville adhésive conforme à la revendication 1,
**caractérisée en ce qu'**
à l'intérieur de la face frontale (11) rétractée et limitée par le bord d'appui (10) sont prévues des nervures de guidage déployées jusqu'au plan d'appui du bord d'appui (10) pour permettre la répartition d'un adhésif introduit dans la zone de la face frontale rétractée (11).

3. Cheville adhésive conforme à la revendication 1 ou 2,
**caractérisée en ce qu'**
elle est équipée sur sa périphérie de deux rainures (15) décalées l'une par rapport à l'autre d'un angle de préférence égal à 90° s'étendant dans la direction axiale de l'axe longitudinal, dont les bords s'appliquent, à l'état monté contre les faces internes de rebords (14) du panneau de construction léger (2) et débouchent dans la zone de la face frontale rétractée (11).

4. Cheville adhésive conforme à l'une des revendications précédentes,
**caractérisée en ce qu'**
elle est réalisée en deux parties et est constituée d'un élément externe (16) en forme de manchon et d'un tourillon d'enfichage (17), ce tourillon d'enfichage (17) comprenant le canal taraudé (6) et étant équipé, dans sa zone inférieure tournée vers la face frontale rétractée (11) de la cheville adhésive, d'ouvertures de remplissage (21) s'étendant radialement vers l'extérieur à partir du canal taraudé (6) et débouchant dans les canaux d'écoulement pour permettre l'introduction d'un adhésif liquide.

5. Cheville adhésive conforme à l'une des revendications précédentes,
**caractérisée en ce que**
le tourillon d'enfichage (17) est enfoncé dans une ouverture d'enfichage de l'élément (16) en forme de manchon et est équipé sur sa périphérie de rainures longitudinales (19) s'étendant dans la direction axiale du tourillon d'enfichage (17), qui forment les canaux d'écoulement, en liaison avec la paroi de l'ouverture d'enfichage (20) et qui s'étendent d'une part jusque dans la zone de la face frontale inférieure rétractée (11) et d'autre part jusque dans la zone des ouvertures de sortie supérieures radiales (22).

6. Cheville adhésive conforme à l'une des revendications précédentes,
**caractérisée en ce que**
le tourillon d'enfichage (17) est équipé sur sa face supérieure d'un capuchon (18) dont la face de base correspond à la face de base de l'élément (16) en forme de manchon, et ce capuchon (18) est collé à l'élément (16) en forme de manchon à l'état monté de la cheville adhésive (1).

7. Cheville adhésive conforme à l'une des revendications précédentes,
**caractérisée en ce qu'**
elle est réalisée en une seule pièce, et est équipée, outre de son canal taraudé (6) d'un perçage de remplissage séparé (23) pour un adhésif.

8. Cheville adhésive conforme à la revendication 7,
**caractérisée en ce que**
le perçage de remplissage débouche dans la zone inférieure rétractée de la cheville adhésive (1), et à partir de cette zone, sont prévus des perçages ascendants (24) s'étendant axialement vers le haut, jusqu'aux ouvertures de sortie (22) et formant des canaux d'écoulement.

9. Cheville adhésive conforme à l'une des revendications précédentes,
**caractérisée en ce que**
le canal taraudé (6) est centré à l'intérieur de la surface de base de la cheville adhésive (1).

10. Cheville adhésive conforme à l'une des revendications précédentes,
**caractérisée en ce que**
le canal taraudé (6) est décentré à l'intérieur de la surface de base de la cheville adhésive (1).

11. Cheville adhésive conforme à l'une des revendications précédentes,
**caractérisée en ce qu'**
elle est réalisée en matériau synthétique.

12. Cheville adhésive conforme à l'une des revendications précédentes,
**caractérisée en ce que**
le capuchon (18) est équipé au moins par zones de zones transparentes.
